# EUROPEAN PATENT APPLICATION

(11) **EP 1 429 502 A2**
(43) Date of publication of application: **16.06.2004**
(21) Application number: 03300236.1
(22) Date of filing: 01.12.2003
(51) Int. Cl.: H04L 12/56, H04L 29/06

(54) **Efficient data transmission method**

(30) Priority: 05.12.2002 US 310024
(71) Applicant: Alcatel Canada Inc., Kanata, Ontario K2K 2E6 (CA)
(72) Inventor: Friesen, Larry, Nepean, Ontario K2G 6P2 (CA); Johnson, Robert John, Ottawa, Ontario K2H 6Y5 (CA)
(74) Representative: Feray, Valérie

(57) **Abstract**

A method for more efficient data transmission by matching the length of the data portions of a packet to the width of the buffer in the processor. In the SPI 4.2 protocol the data portion can be set to 64 bytes and the buffer set to 64 byte width. This allows for more efficient use of the network processor resources while remaining within the bounds set by the standard. The control words bracketing the data portions may also have SOP and/or EOP indications set to specify the start or end of a packet. The Network Processor, by its design, will store each data portion in a 64 byte slot. Packet headers are stored in a single buffer slot, thereby eliminating the need to reassemble the header before the packet can be processed, making packet processing more time efficient.

## Description

This invention relates to an improved method of high speed data transmission, in particular to a data transmission method using the SPI 4.2 protocol.

High speed data transmission in its most efficient form uses packet switching, which sends the data packet and includes information as to routing and switching. Asynchronous communication is frequently used and the present invention is concerned with the protocol SPI 4.2 created by Optical Internetworking Forum (OIF).

In this protocol the data portion is specified as being 16 x N bytes whereas many commercial processors with which it could be used are configurable in multiples of 64 bytes. As data words are received and stored in the processor it may happen that 16 byte data portions are stored in 64 byte slots leading to an inefficient use of resources. Further, if the data portion is the header of a data packet, having it split into 16 byte portions results in both time inefficiency, due to additional cycles being required to assemble the header, and buffer inefficiency.

The present invention provides a method for transmission of data packets using a protocol which specifies data portion lengths of 16xn bytes, said method allowing for more efficient use of the network processor resources while remaining within the bounds set by the standard.

More precisely, the present invention provides a method for transmission of data packets using a protocol which specifies data portion lengths of 16xn bytes and packets bracketed by control words where the transmission occurs between first and second devices, the second device including buffer storage having slots of predetermined width, comprising the steps of:
defining the length of the data portion of the packet to be equal to the width of the slots in the buffer storage,
inserting control words between the data portions, and
transmitting the packets to the second device whereby the data portions fully occupy the slots in the buffer storage.

Thus, the invention relates to a method for transmission of data packets typically under SPI 4.2 protocol between first and second devices, the second device including buffer storage having slots of predetermined width. The length of the data portion of the packet is set to be equal to the width of the slots in the buffer storage. Control words are inserted between the data portions and the packets transmitted to the second device so that the data portions fully occupy the slots in the buffer storage.

The method according to the invention allows for more efficient data transmission by matching the length of the data portions of a packet to the width of the buffer in the processor. In the SPI 4.2 protocol the data portion can be set to 64 bytes and the buffer set to 64 byte width. This allows for more efficient use of the network processor resources while remaining within the bounds set by the standard. The control words bracketing the data portions may also have SOP and/or EOP indications set to specify the start or end of a packet. The Network Processor, by its design, will store each data portion in a 64 byte slot. Packet headers are stored in a single buffer slot, thereby eliminating the need to reassemble the header before the packet can be processed, making packet processing more time efficient.
Fig. 1 is a block diagram of a prior art data transmission system using SPI 4.2 protocol,
Fig. 2 shows more detail of the buffer storage of the system of Fig. 1,
Fig. 3 shows the format of an SPI 4.2 data word, and
Fig. 4 shows an SPI 4.2 data word modified in accordance with the present invention.

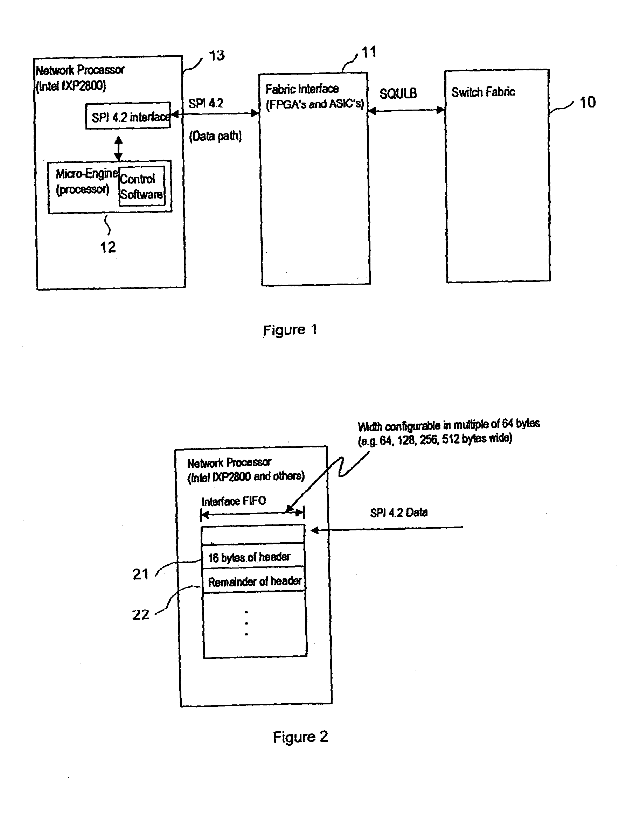

In the prior art system shown in Fig. 1, a switch fabric 10 is interfaced to a network processor, using the SPI 4.2 protocol. Block 11 provides a conversion function from the SPI 4.2 protocol to a proprietary interface preceding the switch fabric, the SQULB (sequential quad utopia-3 like bus) protocol. Further information on the SQULB protocol can be found in pending application 09/988,940 filed November 21, 2001 and entitled "High Speed Sequenced Multi-Channel Bus", which patent application is hereby incorporated herein by reference. A micro-engine 12 in the network processor 13 executes control code to carry out functions necessary to support a SPI 4.2 interface in the network processor.

Referring to Fig. 2, the buffer of the SPI 4.2 interface of the prior art network processor in Fig. 1 is shown in more detail. The buffer is configurable in width to multiples of 64 bytes. An example of a packet header is shown in the buffer, wherein a first part of the header is in one slot 21 of the buffer and the remainder of the header is in an adjacent slot 22 of the buffer. In order to process the packet, the micro-engine 12 must reassemble the packet header from the portions stored in the two slots of the buffer. This reassembly takes time and it would be desirable to avoid it where possible, for instance where the packet header is less than 64 bytes in length and could have been stored in one slot of the buffer.

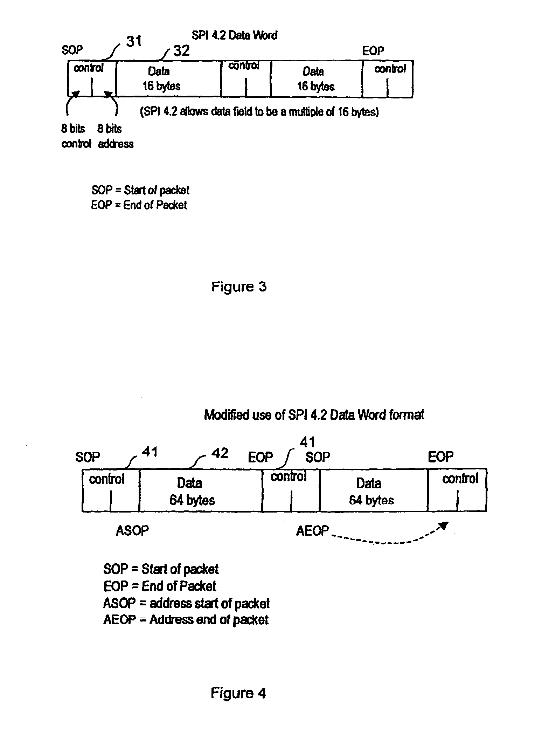

Fig. 3 shows the format of an SPI 4.2 data word, which consists of control word portions 31 and data portions 32. A control word portion consists of an eight bit control field and an eight bit address field. Each data portion is allowed to be a multiple of 16 bytes in length and is bracketed by a control word portion at either end. The control field has a bit configuration that indicates a start of packet (SOP) and another configuration that signifies an end of packet (EOP). When a data word is received by the network processor, each data portion, i.e. the part between control words, is stored in a respective slot of the buffer. The micro-engine uses the SOP and EOP indicators to reassemble a data packet for processing.

Storing 16 byte data portions in separate slots of a buffer that has a minimum slot width of 64 bytes is an inefficient use of the buffer. This leads further to time inefficiencies when the data is retrieved from the buffer for processing, particularly in the case of packet headers.

Referring to Fig. 4, the SPI 4.2 data word format is modified according to the invention to allow for more efficient use of the network processor resources while remaining within the bounds set by the protocol. Specifically, data portions 42 are formed in 64 byte lengths and the buffer of the network processor is configured to a matching length, which is more efficient and is not done in the prior art. The control words 41 bracketing the data portions may also have SOP and/or EOP indications set to spe cify the start or end of a packet. The Network Processor, by its design, will store each data portion in a 64 byte slot. One advantage of the invention is that packet headers can now be stored in a single buffer slot, thereby eliminating the need to reassemble the header before the packet can be processed, which makes packet processing more time efficient.

Thus, an improved method of high speed data transmission has been disclosed while operating within the limits set by the SPI 4.2 protocol.

## Claims

1. Method for transmission of data packets using a protocol which specifies data portion lengths of 16xn bytes and packets bracketed by control words where the transmission occurs between first and second devices, the second device including buffer storage having slots of predetermined width, comprising the steps of:
defining the length of the data portion of the packet to be equal to the width of the slots in the buffer storage,
inserting control words between the data portions, and
transmitting the packets to the second device whereby the data portions fully occupy the slots in the buffer storage.

2. Method of claim 1 wherein the protocol is SPI 4.2.

3. Method according to any one of claims 1 or 2 including the further step of selecting the predetermined width of the buffer storage slots to correspond to the length of data portions in the packet.

4. Method according to any one of claims 1 to 3 wherein the data portions are 64 byte length and the buffer storage slots are of 64 byte length.

5. Method according to any one of claims 1 to 4 wherein the control words include a start of packet indicator and the method includes the further step of using the start of packet indicator to control the storage of the data portions.

6. Method of claim 5 wherein the control words include a start of packet indicator and an end of packet indicator the method including the further step of using these indicators for delineation of the packets and reassembly of the data packets.
